(19) Europäisches Patentamt
European Patent Office
Office européen des brevets

(11) **EP 3 870 945 B1**

(12) **FASCICULE DE BREVET EUROPEEN**

(45) Date de publication et mention de la délivrance du brevet:
**06.03.2024 Bulletin 2024/10**

(21) Numéro de dépôt: **19813078.3**

(22) Date de dépôt: **22.10.2019**

(51) Classification Internationale des Brevets (IPC):
**G01J 5/04** *(2006.01)*    **G01J 5/20** *(2006.01)*

(52) Classification Coopérative des Brevets (CPC):
**G01J 5/20; G01J 5/046**

(86) Numéro de dépôt international:
**PCT/FR2019/052501**

(87) Numéro de publication internationale:
**WO 2020/084242 (30.04.2020 Gazette 2020/18)**

(54) **PROCÉDÉ DE FABRICATION D'UN MICROBOLOMÈTRE A MATÉRIAU THERMISTANCE A BASE D'OXYDE DE VANADIUM PRÉSENTANT DES PERFORMANCES AMÉLIORÉES**

VERFAHREN ZUR HERSTELLUNG EINES MIKROBOLOMETERS MIT THERMISTORMATERIAL AUS VANADIUMOXID MIT VERBESSERTER LEISTUNG

METHOD FOR MANUFACTURING A MICROBOLOMETER WITH THERMISTOR MATERIAL MADE FROM VANADIUM OXIDE HAVING IMPROVED PERFORMANCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2018 FR 1859809**

(43) Date de publication de la demande:
**01.09.2021 Bulletin 2021/35**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **YON, Jean-Jacques**
  **38054 GRENOBLE CEDEX 09 (FR)**
• **PELENC, Denis**
  **38054 Grenoble cedex 09 (FR)**

(74) Mandataire: **Brevalex**
**Tour Trinity**
**1 B Place de la Défense**
**92400 Courbevoie (FR)**

(56) Documents cités:
**EP-A1- 2 894 444    US-A1- 2010 243 896**

**Description**

**DOMAINE TECHNIQUE**

Le domaine de l'invention est celui des dispositifs de détection d'un rayonnement électromagnétique, par exemple infrarouge ou térahertz, comportant au moins un détecteur thermique résistif comprenant un matériau thermistance à base d'oxyde de vanadium. L'invention s'applique notamment au domaine de l'imagerie infrarouge, de la thermographie ou de la détection de gaz.

**ÉTAT DE LA TECHNIQUE ANTÉRIEURE**

Un dispositif de détection de rayonnement électromagnétique peut comporter une matrice de détecteurs thermiques résistifs, également appelés microbolomètres, chaque microbolomètre comportant une portion absorbante apte à absorber le rayonnement électromagnétique à détecter.

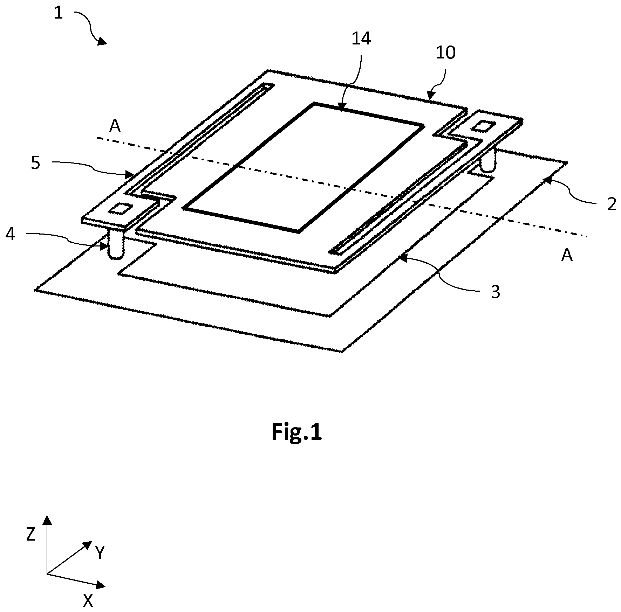

La figure 1 est une vue en perspective d'un exemple de microbolomètre 1 selon l'art antérieur, ici adapté à absorber un rayonnement électromagnétique infrarouge de la bande spectrale LWIR (*Long Wavelength Infrared,* en anglais) dont la longueur d'onde est comprise entre 8μm et 14μm environ.

On définit ici et pour la suite de la description un repère direct tridimensionnel orthogonal XYZ, où le plan XY est sensiblement parallèle au plan du substrat 2 sur lequel repose le microbolomètre 1, l'axe Z étant orienté vers la membrane absorbante 10 suivant un axe sensiblement orthogonal au plan du substrat 2. Par ailleurs, les termes « inférieur » et « supérieur » s'entendent comme étant relatifs à un positionnement croissant lorsqu'on s'éloigne du substrat 2 suivant la direction +Z.

Le microbolomètre 1 comporte une membrane absorbante 10 suspendue au-dessus d'un substrat de lecture 2 par des piliers d'ancrage 4 et isolée thermiquement de celui-ci par des bras d'isolation thermique 5. Ces piliers d'ancrage 4 et bras d'isolation thermique 5 présentent également une fonction électrique en reliant électriquement les membranes absorbantes 10 à un circuit de lecture généralement disposé dans le substrat 2.

La membrane 10 comporte ici un absorbeur adapté à absorber le rayonnement électromagnétique à détecter et un matériau thermistance 14 en contact thermique avec l'absorbeur. Le matériau thermistance 14 est un matériau présentant une résistance électrique qui varie avec son échauffement. Il peut s'agir de silicium amorphe ou d'un oxyde de vanadium. La membrane absorbante 10 est espacée du substrat 2, et en particulier d'une couche réflectrice 3, d'une distance non nulle, laquelle est de préférence ajustée de manière à former une cavité interférentielle quart d'onde optimisant l'absorption par la membrane absorbante 10 du rayonnement électromagnétique à détecter.

Les performances du microbolomètre 1 sont notamment limitées par le bruit associé au matériau thermistance 14. Ainsi, de manière connue, le bruit total $i_{n,tot}$ associé au matériau thermistance (ici le courant de bruit) est la somme du bruit de Johnson issu des fluctuations thermiques des porteurs de charges, du bruit de flicker en 1/f (bruit basse fréquence) issu notamment des fluctuations de mobilité et/ou de densité des porteurs, et du bruit issu des fluctuations de température de la membrane 10.

Il existe un besoin permanent d'améliorer les performances du microbolomètre, notamment de diminuer le bruit associé au matériau thermistance.

Le document US2010/0243896A1 décrit un procédé de fabrication d'un microbolomètre à base de VOx. Pour éviter d'utiliser un matériau métallique dans les bras d'isolation thermique tel que du NiCr, le VOx est déposé également dans les bras d'isolation thermique et vient en contact du matériau électriquement conducteur des piliers d'ancrage. Une implantation ionique dans le VOx est effectuée de manière localisée, ici au-dessus des piliers d'ancrage, dans les bras d'isolation thermique, et en bordure de la membrane absorbante, de manière à réduire la résistivité électrique du VOx ainsi modifié.

D'autres exemples de l'état de la technique sont donnés dans les documents EP2894444 B1 et EP2208975 A1.

**EXPOSÉ DE L'INVENTION**

L'invention a pour objectif de remédier au moins en partie aux inconvénients de l'art antérieur, et plus particulièrement de proposer un procédé de fabrication d'au moins un microbolomètre comportant une membrane destinée à être suspendue au-dessus d'un substrat et comportant un matériau thermistance à base d'oxyde de vanadium, permettant d'obtenir un microbolomètre à performances améliorées.

Pour cela, l'objet de l'invention est un procédé de fabrication d'au moins un microbolomètre, comportant les étapes suivantes :

　○ réalisation de piliers d'ancrage, s'étendant à partir d'un substrat, et comportant chacun un matériau électriquement conducteur ;

○ réalisation de bras d'isolation thermique, comportant chacun une couche d'un matériau métallique au contact du matériau électriquement conducteur du pilier d'ancrage et formant une électrode de polarisation ;
○ réalisation d'une membrane destinée à être suspendue au-dessus du substrat par les piliers d'ancrage et les bras d'isolation thermique, et contenant :

- lesdites électrodes de polarisation,
- une couche isolante dite intermédiaire recouvrant partiellement les électrodes de polarisation et présentant des ouvertures débouchant sur les électrodes de polarisation,
- un matériau thermistance, réalisé en un premier composé à base d'oxyde de vanadium, formé continûment d'une portion dite centrale recouvrant la couche isolante intermédiaire et des portions dites latérales venant au contact des électrodes de polarisation au travers des ouvertures. Le premier composé est aussi appelé 'composé de base'.

Selon l'invention, le procédé comporte en outre les étapes suivantes :

○ détermination d'une quantité dite efficace non nulle d'au moins un élément chimique additionnel incorporé par implantation ionique dans le premier composé, formant ainsi un composé dit modifié, pour lequel la résistivité électrique $\rho_L$ à température ambiante est inférieure ou égale à 10% de la résistivité électrique $\rho_c$ à température ambiante dudit premier composé ;
○ incorporation localisée, par implantation ionique, dans les portions latérales du matériau thermistance, d'une quantité dudit élément chimique additionnel supérieure ou égale à la quantité efficace.

Certains aspects préférés mais non limitatifs de ce procédé de fabrication sont les suivants.

L'élément chimique additionnel est avantageusement choisi parmi l'azote, le carbone, le silicium, le phosphore, le germanium et l'arsenic. L'élément chimique additionnel est de préférence choisi parmi l'azote, le carbone. L'élément chimique additionnel est de préférence l'azote.

Le matériau thermistance peut comporter une quantité x d'oxygène sensiblement identique dans les portions centrale et latérales, x étant la proportion d'oxygène par rapport au vanadium.

Le matériau thermistance peut comporter une quantité x d'oxygène telle que la résistivité électrique à température ambiante du premier composé du matériau thermistance dans la portion centrale est comprise entre 5 $\Omega$.cm et 50 $\Omega$.cm, x étant la proportion d'oxygène par rapport au vanadium. La quantité x d'oxygène est de préférence comprise entre 1,6 et 2,2.

Le composé modifié du matériau thermistance peut comporter une quantité y de l'élément chimique additionnel supérieure ou égale à 0,045, y étant la proportion de l'élément chimique additionnel par rapport au vanadium.

L'étape d'implantation ionique peut comporter un dépôt d'une résine photosensible sur le matériau thermistance, présentant des ouvertures d'implantation situées en regard des ouvertures de la couche isolante intermédiaire, la résine photosensible présentant une épaisseur adaptée de manière à éviter une incorporation de l'élément chimique additionnel dans la portion centrale.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1, déjà décrite, est une vue en perspective, schématique et partielle, d'un exemple de microbolomètre selon l'art antérieur ;

les figures 2A à 2C sont des vues en coupe, schématiques et partielles, de deux exemples de membranes absorbantes (fig.2A et 2B) de microbolomètre selon un mode de réalisation, et d'un microbolomètre (fig.2C) comportant la membrane absorbante illustrée sur la fig.2A ;

la figure 3 illustre un exemple d'évolution de la résistivité électrique $\rho_L$ à température ambiante du composé modifié $VO_xA_y$ du matériau thermistance rapportée à la résistivité électrique $\rho_c$ de son composé de base $VO_x$, pour différentes valeurs y de la quantité d'élément chimique additionnel A ;

la figure 4 illustre un schéma électrique équivalent modélisant le matériau thermistance du microbolomètre selon un mode de réalisation.

**EP 3 870 945 B1**

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, l'expression « comportant un » doit être comprise comme « comportant au moins un » et non pas comme « comportant un unique », sauf indication contraire.

Les indications relatives à la composition chimique d'un composé sont exprimées par sa formule chimique brute, exprimée conventionnellement par rapport à un (1) atome de vanadium. Ainsi, pour un composé $VO_xA_y$, mentionné ici à titre purement illustratif, où A est un élément chimique additionnel, la valeur x est le nombre d'atomes d'oxygène pour 1 atome de vanadium (proportion relative d'oxygène par rapport au vanadium), et la valeur y est le nombre d'atomes de l'élément A pour 1 atome de vanadium (proportion relative de l'élément A par rapport au vanadium). La valeur de la quantité de l'élément chimique est donnée à 10% près. Par ailleurs, la proportion atomique de chaque élément chimique dans le composé $VO_xA_y$ est de $1/(1+x+y)$ pour le vanadium, de $x/(1+x+y)$ pour l'oxygène, et de $y/(1+x+y)$ pour l'élément A.

L'invention porte sur un procédé de fabrication d'au moins un détecteur thermique résistif, également appelé microbolomètre, comportant un matériau thermistance à base d'oxyde de vanadium $VO_x$. Le microbolomètre peut être adapté à détecter un rayonnement infrarouge ou térahertz. Il est, dans la suite de la description, particulièrement adapté à détecter un rayonnement infrarouge de la gamme LWIR *(Long Wavelength Infrared,* en anglais) dont la longueur d'onde est comprise entre $8\mu m$ et $14\mu m$ environ.

Le microbolomètre comporte une membrane suspendue au-dessus d'un substrat de lecture et avantageusement isolée de celui-ci par des bras d'isolation thermique. La membrane comporte un matériau thermistance, c'est-à-dire un matériau dont la résistance électrique varie avec son échauffement.

Dans le cadre de l'invention, le matériau thermistance est à base d'oxyde de vanadium $VO_x$, c'est-à-dire qu'il est un composé comportant un oxyde de vanadium $VO_x$ ainsi que, localement, au moins un élément chimique additionnel noté A. Autrement dit, dans le cadre de l'invention, le matériau thermistance comporte une première portion dite centrale réalisée à base de $VO_x$ sans l'élément chimique additionnel A, et des deuxièmes portions dites latérales, distinctes l'une de l'autre et réalisées à base de $VO_xA_y$ c'est-à-dire à base de $VO_x$ et avec une quantité y non nulle de l'élément chimique additionnel A.

Dans la suite de la description, on nomme 'composé de base' le matériau thermistance situé dans la portion centrale et ne comportant donc pas l'élément chimique additionnel A incorporé par implantation ionique. Il peut comporter d'autres éléments chimiques que le vanadium et l'oxygène qui auraient été incorporés à la croissance. Il peut ainsi comporter l'élément chimique additionnel A, qui aurait alors été incorporé à la croissance du composé de base. Par ailleurs, on nomme 'composé modifié' le matériau thermistance situé dans les portions latérales, et formé du composé de base et de l'élément chimique additionnel A incorporé par implantation ionique.

Le matériau thermistance est de préférence choisi de sorte que le composé de base présente une résistivité électrique à température ambiante comprise entre $5\ \Omega.cm$ et $50\ \Omega.cm$ environ, de préférence comprise entre $7\ \Omega.cm$ et $30\ \Omega.cm$ environ. Pour cela, la proportion relative x d'oxygène vis-à-vis du vanadium est comprise entre 1.6 et 2.2 environ, et de préférence comprise entre 1.8 et 2.0. Il peut cependant présenter une proportion relative x différente. A titre illustratif, le composé de formule chimique brute $VO_2$ comporte 2 atomes d'oxygène pour 1 atome de vanadium (x=2), le composé $V_2O_3$ comporte 3 atomes d'oxygène pour 2 atomes de vanadium (x=1,5), et le composé $V_2O_5$ comporte 5 atomes d'oxygène pour 2 atomes de vanadium (x=2,5). Le matériau thermistance peut être un matériau amorphe ou un matériau cristallin présentant une ou plusieurs phases cristallines. Il peut également se présenter sous la forme d'un mélange d'une phase amorphe et d'une ou plusieurs phases cristallines.

L'élément chimique additionnel A est défini comme étant un élément chimique ajouté volontairement, par implantation ionique et de manière locale, au matériau thermistance, et permettant de diminuer la résistivité électrique à température ambiante du matériau thermistance d'au moins un rapport 10.

Plus précisément, le composé modifié $VO_xA_y$ situé dans les portions latérales comporte une quantité y de l'élément chimique additionnel A supérieure ou égale à une quantité dite efficace $y_{eff}$ pour laquelle sa résistivité électrique $\rho_L$ à température ambiante est inférieure ou égale à 10% de la résistivité électrique $\rho_c$ à température ambiante du composé de base situé dans la portion centrale. Autrement dit, $\rho_L$ est inférieure ou égale à $\rho_c/10$ environ, de préférence inférieure ou égale à $\rho_c/50$ environ, et de préférence inférieure ou égale à $\rho_c/200$ environ. La température ambiante peut être comprise, par exemple, entre 20°C et 30°C. Ainsi, pour une résistivité électrique $\rho_c$ à température ambiante du composé de base $VO_x$ égale à $10\ \Omega.cm$ environ, le composé modifié $VO_xA_y$ comporte une quantité y de l'élément chimique additionnel A telle que la résistivité électrique $\rho_L$ à température ambiante est inférieure ou égale à $1\ \Omega.cm$, de préférence inférieure ou égale à $0,2\ \Omega.cm$, et de préférence encore inférieure ou égale à $0,05\ \Omega.cm$.

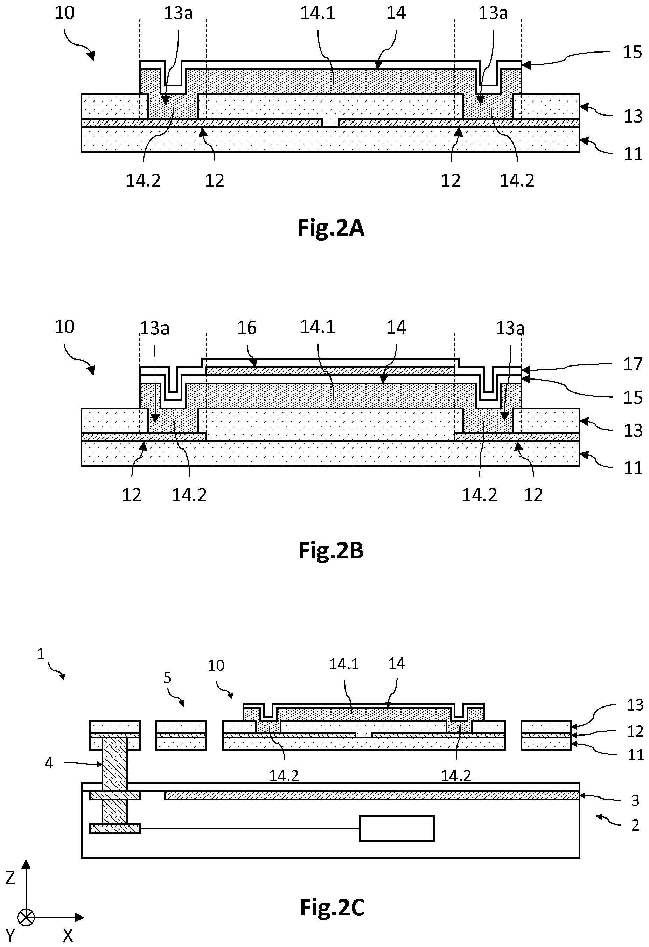

Les figures 2A à 2C sont des vues schématiques et partielles, en coupe suivant le plan A-A illustré sur la fig.1, de deux variantes d'une membrane absorbante 10 suspendue au-dessus d'un substrat de lecture, selon un mode de

4

réalisation du microbolomètre 1. Le repère XYZ a été défini précédemment.

En référence à la fig.2A, la membrane absorbante 10 peut comporter une couche isolante inférieure 11 sur laquelle reposent ici deux électrodes de polarisation 12. La couche isolante inférieure 11 est ici réalisée en un matériau diélectrique, par exemple en un matériau d'oxyde de silicium, un nitrure de silicium ou un oxynitrure de silicium, d'une épaisseur par exemple comprise entre 10nm et 100nm, de préférence comprise entre 30nm et 50nm. Elle peut participer à assurer la rigidification des bras d'isolation thermique.

Les électrodes de polarisation 12 sont réalisées en un matériau électriquement conducteur, par exemple en un métal choisi parmi le Ti, TiN, TaN, WN ou autre, et présente une épaisseur par exemple comprise entre 5nm et 20nm. Elles sont ici avantageusement réalisées en un matériau absorbant vis-à-vis du rayonnement électromagnétique à détecter et forment ainsi l'absorbeur. Les électrodes de polarisation 12 sont coplanaires et sont physiquement distinctes et électriquement isolées l'une de l'autre. Elles sont avantageusement dimensionnées en épaisseur de sorte qu'elles présentent une résistance de couche sensiblement égale à $377\Omega$/carré, permettant ainsi d'optimiser l'absorption du rayonnement électromagnétique à détecter.

Les électrodes de polarisation 12 sont revêtues partiellement par une couche isolante intermédiaire 13 réalisée ici en un matériau diélectrique, par exemple en un matériau identique ou similaire à celui de la couche isolante inférieure 11, et peut également présenter une épaisseur de l'ordre de quelques dizaines de nanomètres, par exemple comprise entre 10nm et 110nm, de préférence comprise entre 30nm et 50nm environ. Elle peut participer à assurer, avec la couche isolante inférieure 11, la rigidification des bras d'isolation thermique.

La couche isolante intermédiaire 13 est structurée pour présenter au moins deux ouvertures 13a débouchant sur les électrodes de polarisation 12. Les ouvertures 13a présentent ainsi une hauteur suivant l'axe Z correspondant à l'épaisseur de la couche isolante intermédiaire 13. Elles sont délimitées par les flancs latéraux de la couche isolante intermédiaire 13, qui s'étendent verticalement de manière sensiblement parallèle à l'axe Z. Elles peuvent présenter une dimension transversale, ou largeur, dans le plan XY, compris entre 200nm et 1000nm, par exemple égale à 500nm environ.

Un matériau thermistance 14 à base d'oxyde de vanadium $VO_x$ recouvre au moins partiellement la couche isolante intermédiaire 13, et vient au contact de chacune des deux électrodes de polarisation 12 au travers des ouvertures 13a. Il présente une épaisseur par exemple comprise entre 20nm et 200nm, de préférence comprise entre 40nm et 80nm. De préférence, la proportion relative d'oxygène x est telle que la résistivité électrique du matériau thermistance 14 à température ambiante est comprise entre 5 $\Omega$.cm et 50 $\Omega$.cm, et de préférence comprise entre 7 $\Omega$.cm et 30 $\Omega$.cm.

Le matériau thermistance 14 est donc formé continûment d'une portion centrale 14.1 et d'au moins deux portions latérales 14.2. La portion centrale 14.1 s'étend de manière sensiblement plane sur la couche isolante intermédiaire 13, et les deux portions latérales 14.2 s'étendent à partir de la portion centrale 14.1 jusqu'à venir au contact des électrodes de polarisation 12, au travers des ouvertures 13a pratiquées dans la couche isolante intermédiaire 13. La portion centrale 14.1 présente ainsi une topologie essentiellement bidimensionnelle alors que les portions latérales 14.2 présentent une topologie essentiellement tridimensionnelle.

Enfin, le matériau thermistance 14 est ici avantageusement recouvert d'une couche supérieure de protection 15, réalisée par exemple en un nitrure de silicium SiN ou un oxyde de silicium SiO, d'une épaisseur typique de 10nm environ, laquelle permet d'éviter toute contamination ou dégradation du matériau thermistance 14, notamment lors de la suppression de couches sacrificielles utilisées pour la fabrication du détecteur thermique.

La fig.2B illustre une membrane absorbante 10 selon une variante de réalisation. La membrane se distingue de celle décrite en référence à la fig.2A essentiellement en ce que les électrodes de polarisation 12 n'assurent pas la fonction optique d'absorbeur. Cependant, comme décrit précédemment, le matériau thermistance 14 recouvre une couche isolante intermédiaire 13 au niveau de sa portion centrale 14.1 et vient au contact des électrodes de polarisation 12 par ses deux portions latérales 14.2.

Dans cet exemple, la couche isolante intermédiaire 13 est réalisée en un matériau semiconducteur et non pas en un matériau diélectrique, par exemple en silicium amorphe. De préférence, la couche isolante inférieure 11 est réalisée en un matériau semiconducteur identique ou similaire, en termes de résistivité électrique, à celui de la couche isolante intermédiaire 13. Un tel matériau présente habituellement une faible conductivité thermique, ce qui permet d'améliorer l'isolation thermique de la membrane absorbante 10, en particulier lorsque les couches isolantes inférieure 11 et intermédiaire 13 s'étendent dans les bras d'isolation thermique. Les couches isolantes 11, 13 peuvent ainsi être réalisées en silicium amorphe de résistivité électrique supérieure ou égale à 1000 $\Omega$.cm environ et d'une épaisseur égale à 40nm environ.

Les deux électrodes de polarisation 12 sont espacées latéralement l'une de l'autre d'une distance de l'ordre de la distance qui sépare les ouvertures 13a en prévoyant toutefois une garde (100 à 500nm) de manière à garantir que l'ouverture 13a ne soit pas à cheval sur le bord des électrodes 12, de manière à assurer l'isolation électrique des deux électrodes de polarisation 12 l'une vis-à-vis de l'autre. Pour compenser la réduction de l'absorption du rayonnement électromagnétique par les électrodes de polarisation 12, une couche supplémentaire d'absorption 16, par exemple du TiN d'une épaisseur de 8nm, est déposée sur la couche supérieure de protection 15 à la perpendiculaire de l'espacement latéral entre les deux électrodes de polarisation 12. Une couche supplémentaire de protection 17 recouvre avantageusement la couche d'absorption 16.

La fig.2C est une vue en coupe, schématique et partielle, d'un dispositif de détection 1 comportant une membrane absorbante 10 telle qu'illustrée sur la fig.2A. Il comporte des piliers d'ancrage 4 et des bras d'isolation thermique 5 qui maintiennent suspendue la membrane absorbante 10 au-dessus du substrat 2, et assurent la connexion électrique de celle-ci à un circuit de lecture avantageusement situé dans le substrat 2. Les piliers d'ancrage 4 comportent ainsi un matériau électriquement conducteur, de préférence métallique, et s'étendent ici suivant l'axe Z. Les bras d'isolation thermique 5 comportent chacun la couche 12 d'électrode de polarisation, et s'étendent ici dans le plan XY à partir des piliers d'ancrage. La couche 12 s'étend ainsi dans les bras d'isolation thermique 5 à partir des piliers d'ancrage 4, jusqu'à la membrane absorbante 10. Le matériau thermistance 14 ne s'étend qu'au niveau de la membrane absorbante 10, et ne s'étend pas sur les bras d'isolation thermique 5, ni au-dessus des piliers d'ancrage 4.

Les inventeurs ont constaté que, dans cette configuration où le matériau thermistance 14 vient localement au contact des électrodes de polarisation 12 au travers des ouvertures 13a, le détecteur thermique présente un bruit en 1/f excédentaire lorsque le matériau thermistance 14 est réalisé à base d'oxyde de vanadium $VO_x$. Comme indiqué précédemment, le bruit en 1/f, également appelé bruit de flicker ou bruit basse fréquence, provient notamment des fluctuations de mobilité et/ou de densité des porteurs libres. Il apparaît en effet qu'un tel bruit en 1/f excédentaire n'est sensiblement pas présent lorsque le matériau thermistance 14 est réalisé en d'autres matériaux thermistance, par exemple en silicium amorphe. De plus, il apparaît également qu'un tel bruit en 1/f excédentaire n'est sensiblement pas présent lorsque le matériau thermistance 14 à base d'oxyde de vanadium $VO_x$ s'étend de manière sensiblement plane. Il en ressort que ce bruit en 1/f excédentaire est associé essentiellement aux portions latérales 14.2 du matériau thermistance 14 à base d'oxyde de vanadium $VO_x$.

Ainsi, le bruit total $i_{n,tot}$ associé au matériau thermistance 14 (ici le courant de bruit) comporte une première composante $i_{n,c}$ associée à la portion centrale 14.1, et une deuxième composante $i_{n,L}$ associée aux portions latérales 14.2. Cette composante $i_{n,L}$ de forte valeur entraîne une dégradation des performances du microbolomètre 1.

Pour améliorer les performances du microbolomètre 1, et en particulier s'affranchir du bruit en 1/f excédentaire du matériau thermistance 14, le procédé de fabrication du microbolomètre 1 prévoit d'incorporer dans les portions latérales 14.2, par implantation ionique, au moins un élément chimique additionnel A de sorte que la résistivité électrique $\rho_L$ à température ambiante du composé modifié $VO_xA_y$ situé dans les portions latérales 14.2 soit inférieure ou égale à 10% de la résistivité électrique $\rho_c$ à température ambiante du composé de base $VO_x$ situé dans la portion centrale 14.1. En effet, comme explicité en détail plus loin, la faible résistivité électrique $\rho_L$ des portions latérales 14.2 vis-à-vis de la résistivité électrique $\rho_c$ de la portion centrale 14.1 permet de s'affranchir du bruit en 1/f excédentaire présent dans les portions latérales 14.2, et ainsi d'améliorer les performances du microbolomètre 1.

L'élément chimique supplémentaire A est de préférence choisi parmi l'azote N, le carbone C, le silicium Si, le phosphore P, germanium Ge, Arsenic As. En effet, les inventeurs ont constaté que l'implantation ionique d'au moins l'un de ces éléments chimiques additionnels dans le composé de base $VO_x$ pour obtenir le composé modifié $VO_xA_y$ permet de réduire fortement la résistivité électrique à température ambiante. Les inventeurs ont observé qu'une telle diminution de la résistivité électrique à température ambiante n'est pas obtenue lorsque l'élément chimique supplémentaire A est incorporé à la croissance du matériau thermistance 14, lorsque la proportion relative d'oxygène x reste inchangée. Par ailleurs, d'autres éléments chimiques incorporés par implantation ionique ne permettent pas d'obtenir une telle diminution de la résistivité électrique à température ambiante, comme par exemple le bore B.

A ce titre, les inventeurs ont ainsi observé que l'implantation ionique d'azote dans un composé de base d'oxyde de vanadium $VO_x$ avec x=1,8 environ, et avec une proportion atomique d'azote de l'ordre de 4%, conduit à former un composé modifié $VO_{1,8}A_{0,112}$ présentant une résistivité électrique à température ambiante de l'ordre de 0,05 $\Omega$.cm, bien inférieure à la résistivité électrique égale à 10 $\Omega$.cm environ du composé de base $VO_{1,8}$. En comparaison, l'incorporation d'une même proportion atomique d'azote lors de la croissance du matériau thermistance 14 conduit à une résistivité électrique à température ambiante de l'ordre de 10 $\Omega$.cm, soit sensiblement égale à la résistivité électrique du composé de base $VO_{1,8}$. L'incorporation d'azote à la croissance peut être réalisée en déposant le matériau en milieu réactif en injectant une faible pression d'azote moléculaire $N_2$ dans le réacteur de dépôt. L'implantation ionique d'un tel élément chimique additionnel A dans le composé de base $VO_x$ permet donc, de manière surprenante, d'obtenir une forte diminution de la résistivité électrique du matériau, ce que ne permet pas l'incorporation à la croissance.

Ainsi, le procédé de fabrication du microbolomètre 1 selon un mode de réalisation comporte une première étape de réalisation de la membrane destinée à être suspendue au-dessus d'un substrat et contenant deux électrodes de polarisation 12 revêtue de la couche isolante intermédiaire 13 qui présente deux ouvertures 13a débouchant sur les électrodes de polarisation 12, le matériau thermistance 14 à base d'oxyde de vanadium recouvrant la couche isolante intermédiaire 13 et venant au contact des électrodes de polarisation 12 au travers des ouvertures 13a. Les étapes de réalisation sont ici similaires ou identiques à celles décrites notamment dans le brevet US9933309. Les étapes suivantes sont ici relatives à la fabrication de la membrane absorbante 10 illustrée sur les fig.2A et 2C. Il comprend des étapes des piliers d'ancrage 4 et des bras d'isolation thermique 5.

Pour cela, on dépose la couche isolante inférieure 11 sur une couche sacrificielle recouvrant le substrat de lecture, au travers de laquelle s'étendent des piliers d'ancrage. La couche isolante inférieure 11 peut être réalisée en nitrure de silicium d'une épaisseur comprise entre 30nm et 50nm. Les piliers d'ancrage s'étendent à partir du substrat de lecture, de préférence suivant un axe Z sensiblement orthogonal au plan XY du substrat. Ils comportent chacun un matériau électriquement conducteur, et participent à assurer la connexion électrique de la membrane absorbante 10 au circuit de lecture.

On dépose ensuite une couche conductrice destinée à former notamment les électrodes de polarisation 12. La couche conductrice est réalisée par exemple en TiN, et présente une épaisseur par exemple comprise entre 5nm et 20nm. La couche conductrice est ensuite structurée par photolithographie et gravure, de manière à former les deux électrodes de polarisation 12. Celles-ci sont distinctes et électriquement isolées l'une de l'autre par un espacement latéral dans le plan XY.

On dépose ensuite la couche isolante intermédiaire 13 de manière à recouvrir la couche isolante inférieure 11 et les électrodes de polarisation 12. Elle s'étend ainsi dans l'espacement latéral des électrodes de polarisation 12. Elle est réalisée de préférence en un matériau diélectrique identique à celui de la couche isolante inférieure 11 et présente une épaisseur de préférence comprise entre 30nm et 50nm.

On forme ensuite les ouvertures 13a au travers de la couche isolante intermédiaire 13, par photolithographie et gravure localisée, de sorte qu'elles débouchent sur les électrodes de polarisation 12. Les ouvertures 13a sont alors délimitées transversalement par les flancs latéraux de la couche isolante intermédiaire 13.

On dépose ensuite le composé de base $VO_x$ du matériau thermistance 14, de manière à recouvrir la couche isolante intermédiaire 13 et à venir au contact des électrodes de polarisation 12 au travers des ouvertures 13a. Le matériau thermistor est ici réalisé par pulvérisation par faisceau d'ions (IBS, *pour Ion Beam Sputtering,* en anglais), par exemple en pulvérisant une cible de vanadium sous atmosphère oxydante à une pression partielle d'oxygène. Il présente une épaisseur permettant de former continûment une portion centrale 14.1 qui repose sur la couche isolante intermédiaire 13, et deux portions latérales 14.2 qui s'étendent à partir de la portion centrale 14.1 dans les ouvertures 13a jusqu'à venir au contact des électrodes de polarisation 12. Les portions latérales 14.2 sont disposées de part et d'autre de la portion centrale 14.1. L'épaisseur du matériau thermistance 14 est comprise entre 20nm et 200nm, de préférence entre 40nm et 80nm.

A ce stade, le matériau thermistance 14 est formé du composé de base, ici du $VO_x$, et ne comporte pas d'élément chimique additionnel A. La proportion relative d'oxygène x est avantageusement comprise entre 1,8 et 2,0 environ de sorte que la résistivité électrique à température ambiante soit de l'ordre de 10 $\Omega$.cm à 20 $\Omega$.cm. Le matériau thermistance 14 présente ainsi une résistivité électrique à température ambiante sensiblement homogène au sein du matériau. Comme mentionné précédemment, la portion centrale 14.1 présente une résistance électrique $R_c$ et un bruit $i_{n,c}$ faible (topologie plane), et les portions latérales 14.2 présentent une résistance électrique $R_L$ inférieure à $R_c$, par exemple 5 à 10 fois inférieure, et un bruit $i_{n,L}$ élevé (topologie tridimensionnelle).

On dépose ensuite, de préférence, une couche supérieure de protection 15 de manière à recouvrir le matériau thermistance 14, par exemple du nitrure de silicium d'une épaisseur de 10nm environ. Cette couche de protection permet de préserver les propriétés du matériau thermistance 14 lors d'une étape ultérieure de suppression des couches sacrificielles.

Le procédé comporte par ailleurs une étape de détermination de la quantité efficace $y_{eff}$ de l'élément chimique additionnel A à incorporer dans les portions latérales 14.2 du matériau thermistance 14 par implantation ionique, de sorte que la résistivité électrique $\rho_L$ du composé modifié situé dans les portions latérales 14.2 soit inférieure ou égale à 10% de la résistivité électrique $\rho_c$ du composé de base situé dans la portion centrale 14.1.

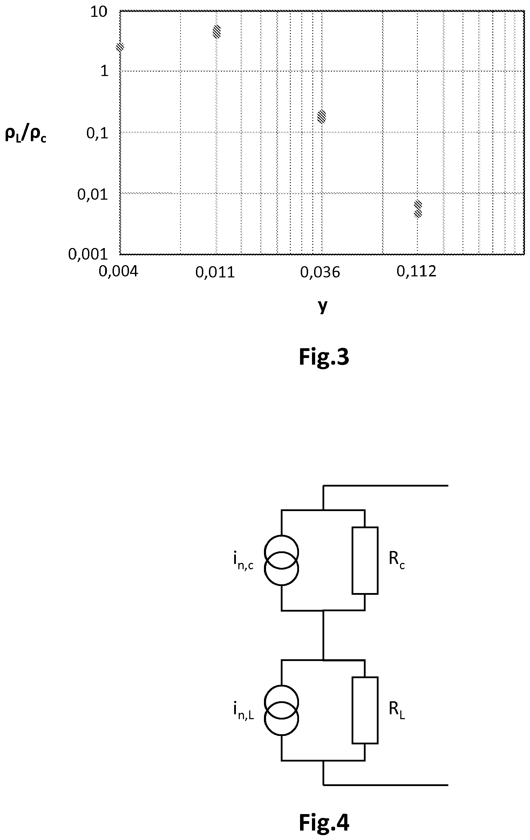

Ainsi, la quantité efficace $y_{eff}$ peut être déterminée par des essais expérimentaux. Ainsi, la figure 3 illustre un exemple d'évolution de la résistivité électrique $\rho_L$ du matériau thermistance 14 $VO_xN_y$, où l'élément chimique additionnel A incorporé par implantation ionique dans le composé de base est de l'azote, pour différentes valeurs de la quantité y d'azote. Dans cet exemple, les valeurs de la résistivité électrique $\rho_L$ sont rapportées à la valeur $\rho_c$ de la résistivité électrique du composé de base.

Dans cet exemple, le composé de base $VO_x$ du matériau thermistance 14 a été réalisé par pulvérisation par faisceau d'ions (IBS) en pulvérisant une cible de vanadium sous atmosphère oxydante à une pression partielle d'oxygène. La proportion relative x d'oxygène est égale à 1,8 environ, de sorte que la résistivité électrique $\rho_c$ à température ambiante du composé de base $VO_{1,8}$ est égale à 10 $\Omega$.cm environ. L'épaisseur du composé de base $VO_{1,8}$ est égale à 80nm environ, et le composé de base $VO_{1,8}$ est revêtu d'une couche de nitrure de silicium de 10nm. Le composé modifié $VO_{1,8}N_y$ est ensuite obtenu en incorporant de l'azote par implantation ionique dans le composé de base $VO_{1,8}$. Quatre échantillons du composé modifié $VO_{1,8}N_y$ sont obtenus pour différentes doses d'implantation d'azote avec une énergie d'implantation de 25keV (ici dans le cas où le composé de base est revêtu d'une couche de protection en nitrure de silicium de 10nm d'épaisseur), à savoir $1 \times 10^{15}$ cm$^{-2}$, $3 \times 10^{15}$ cm$^{-2}$, $1 \times 10^{16}$ cm$^{-2}$ et $3 \times 10^{16}$ cm$^{-2}$ (déterminées à partir d'un logiciel du type Athena de la société Sivaco). La proportion relative d'azote y est respectivement égale à 0.004, 0.011, 0.036 et 0.112 environ (correspondant respectivement à une proportion atomique de 0.13%, 0.4%, 1.3%, 4%).

Ces essais expérimentaux permettent de déterminer ici la quantité efficace $y_{eff}$ d'azote nécessaire pour que la résistance électrique $\rho_L$ du composé modifié $VO_{1,8}N_y$ soit inférieure ou égale à 10% de la résistivité électrique $\rho_c$ du composé de base $VO_{1,8}$. Il apparaît que pour y=0.004 et y=0.011, la résistivité électrique $\rho_L$ est supérieure ou égale à la résistivité électrique $\rho_c$. Cependant, pour y=0,036, la résistivité électrique $\rho_L$ est sensiblement égale à $\rho_c/5$. Et pour y=0,112, la résistivité électrique $\rho_L$ est sensiblement égale à $\rho_c/200$. Ainsi, on peut déterminer par interpolation que la quantité efficace $y_{eff}$ d'azote à partir de laquelle la résistivité électrique est inférieure ou égale à $\rho_c/10$, est sensiblement égale à 0,045.

Par ailleurs, il apparaît que l'élément chimique additionnel peut être choisi parmi l'azote N, le carbone C, le silicium Si, le phosphore P, germanium Ge, Arsenic As, dans la mesure où ils permettent tous d'obtenir un composé modifié $VO_xA_y$ présentant une résistance électrique $\rho_L$ inférieure ou égale à 10% de la résistivité électrique $\rho_c$ du composé de base $VO_x$. Cette forte diminution de la résistivité électrique est ainsi observée pour ces éléments incorporés par implantation ionique dans le composé de base.

A titre d'exemple, le tableau ci-dessous indique la valeur de la résistivité électrique $\rho_L$ à température ambiante pour différents échantillons de composé modifié $VO_xA_y$, où la proportion relative d'oxygène x est égale à 1,8 environ. La dose d'implantation de l'élément chimique additionnel A est égale à $3\times10^{16}$ cm$^{-2}$ et l'énergie d'implantation est également indiquée (ici dans le cas d'une couche de base en $VO_x$ de 80nm d'épaisseur revêtue d'une couche de protection de 10nm en nitrure de silicium).

| Elément A | Azote | Carbone | Silicium | Phosphore | Germanium | Arsenic |
|---|---|---|---|---|---|---|
| Energie | 25 keV | 21 keV | 47 keV | 48 keV | 95 keV | 98 keV |
| $\rho_L / \rho_c$ | 1/200 | 1/10 | 1/50 | 1/15 | 1/90 | 1/24 |

L'élément chimique additionnel A peut être avantageusement choisi parmi l'azote, le silicium et le germanium, et de préférence parmi l'azote et le germanium dans la mesure où ces éléments permettent d'obtenir une résistivité électrique particulièrement faible.

En variante, l'élément chimique additionnel A peut être avantageusement choisi parmi l'azote et le carbone dans la mesure où ces éléments permettent d'obtenir une faible résistivité électrique avec une énergie d'implantation moindre. De plus, ces éléments étant des atomes légers, ils n'entraînent sensiblement pas de modification des propriétés physicochimiques de la résine photosensible utilisée lors de l'implantation ionique pour définir les zones d'implantation, permettant alors de ne pas complexifier la suppression (*stripping*, en anglais) de la résine photosensible. En effet, sous un fort bombardement ionique, la résine photosensible peut être modifiée en surface rendant alors plus complexe sa suppression.

De préférence, l'élément chimique additionnel A est de l'azote. En effet, il apparaît que l'azote implanté permet de réduire fortement la résistivité électrique $\rho_L$ tout en permettant une suppression simple de la résine photosensible utilisée lors de l'implantation ionique.

La dose d'implantation de l'élément chimique additionnel A peut être adaptée de sorte que la résistance électrique $\rho_L$ du composé modifié $VO_xA_y$ soit sensiblement égale à 10% de la résistivité électrique $\rho_c$ du composé de base $VO_x$, voire moins. Ce peut être le cas notamment de l'azote, mais également du silicium et du germanium. En effet, outre le fait que l'étape d'incorporation par implantation ionique présente alors une durée et donc un coût moindres, la résine photosensible utilisée pour définir les zones d'implantation présente une modification moindre de ses propriétés physicochimiques, simplifiant ainsi l'étape de suppression de la résine (*stripping*).

Le procédé comporte ensuite une étape d'incorporation par implantation ionique de l'élément chimique additionnel A dans les portions latérales 14.2 du matériau thermistance 14, et non pas dans la portion centrale 14.1, d'une quantité supérieure ou égale à la quantité efficace $y_{eff}$, par exemple d'azote de sorte que la proportion relative y d'azote dans les portions latérales 14.2 soit supérieure ou égale à 0,045.

Pour cela, on dépose une résine photosensible sur le matériau thermistance 14, et plus précisément, sur la couche supérieure de protection 15, que l'on structure par photolithographie pour définir des ouvertures d'implantation situées en regard des ouvertures 13a de la couche isolante intermédiaire 13. La largeur des ouvertures d'implantation de la résine photosensible est supérieure ou égale à celle des ouvertures, et de préférence légèrement supérieure pour se prémunir d'un éventuel désalignement entre les ouvertures d'implantation et les ouvertures 13a. L'épaisseur de la résine photosensible est définie de manière à éviter toute incorporation d'azote dans la portion centrale 14.1. La largeur des zones d'implantation est délimitée par les traits en pointillé sur les fig.2A et 2B, définissant ainsi latéralement les portions latérales 14.2 formées du composé modifié $VO_xA_y$.

L'incorporation de l'azote est effectuée par implantation ionique dans les portions latérales 14.2 du matériau thermistance 14. Les paramètres opérationnels de l'implantation ionique sont définis de sorte que le pic de la gaussienne d'implantation soit situé au milieu de l'épaisseur des portions latérales 14.2. A titre d'exemple, une dose d'implantation

de $3 \times 10^{16}$ cm$^{-2}$ à 25keV permet d'obtenir une proportion atomique d'azote de 4% environ (y=0,112) dans un composé VO$_x$ d'une épaisseur de 80nm environ revêtu d'une couche de SiN de 10nm environ. Du fait de l'épaisseur de la résine photosensible, les propriétés de la portion centrale 14.1 ne sont ainsi sensiblement pas modifiées. Il en résulte alors, comme mentionné précédemment, que la portion centrale 14.1 présente une résistance électrique R$_c$ et un bruit i$_{n,c}$ faible, identiques aux valeurs avant l'étape d'implantation ionique, alors que les portions latérales 14.2 présentent une résistance électrique R$_L$ très inférieure à R$_c$, par exemple 1500 fois inférieure, et garde un bruit i$_{n,L}$ élevé. Comme expliqué plus loin, du fait de la forte diminution de la résistivité électrique $\rho_L$ et donc de la résistance électrique R$_L$, le bruit i$_{n,L}$ n'impacte sensiblement plus les performances du microbolomètre 1.

On supprime ensuite la résine photosensible (*stripping*). La couche supérieure de protection 15 peut être gardée, voire être remplacée par une nouvelle couche de protection.

On structure ensuite la couche de protection ainsi que le matériau thermistance 14, par photolithographie et gravure, de manière à obtenir une membrane absorbante 10 destinée à être suspendue.

Par la suite, le procédé comporte les étapes suivantes classiques de fabrication du microbolomètre 1, telles que la structuration des bras d'isolation thermique (qui, en variante, peut être réalisée à une étape antérieure), une éventuelle réalisation d'une structuration d'encapsulation définissant une cavité avantageusement hermétique et logeant un ou plusieurs microbolomètres 1, la suppression des couches sacrificielles, la mise sous vide, etc. Ces étapes sont notamment décrites dans le brevet US9933309 et ne sont pas détaillées ici. Les bras d'isolation thermique 5 s'étendent à partir des piliers d'ancrage 4, de préférence dans un plan XY parallèle au substrat 2. Ils comportent une couche 12 d'un matériau électriquement conducteur, de préférence métallique, en contact électrique avec le matériau conducteur des piliers d'ancrage.

Ainsi, on obtient un matériau thermistance 14 dont les portions latérales 14.2 sont réalisées en le composé modifié VO$_x$A$_y$ avec y non nul, et la portion centrale 14.1 est réalisée en le composé de base VO$_x$. La proportion relative x d'oxygène est sensiblement homogène dans le matériau thermistance 14, c'est-à-dire qu'elle est sensiblement identique dans la portion centrale 14.1 et dans les portions latérales 14.2. Aussi, le composé modifié VO$_x$A$_y$, présente une résistivité électrique $\rho_L$ au moins inférieure ou égale au dixième de la résistivité électrique $\rho_c$ du composé de base VO$_x$.

Le fait que le matériau thermistance 14 présente des portions latérales 14.2 au contact des électrodes de polarisation 12 de faible résistivité électrique $\rho_L$ par rapport à celle $\rho_c$ de la portion centrale 14.1 permet d'améliorer les performances du microbolomètre 1. En effet, du fait de la faible résistivité électrique $\rho_L$ du matériau thermistance 14 dans les portions latérales 14.2, il apparaît que le bruit excédentaire présent associé dans les portions latérales 14.2, et notamment le bruit en 1/f excédentaire, n'impacte pas ou quasiment pas les performances du microbolomètre 1.

Pour illustrer cela, la figure 4 représente un schéma électrique équivalent modélisant le matériau thermistance 14 dans le cadre de l'invention.

Le matériau thermistance 14 peut en effet être modélisé par un montage en série de deux blocs électriques. Chaque bloc électrique est formé d'un terme R de résistance électrique en parallèle avec un terme i$_n$ de bruit (ici le courant de bruit). Ainsi, le premier bloc électrique correspond à la portion centrale 14.1 du matériau thermistance 14, et est caractérisé par une résistance électrique R$_c$ élevée (résistivité électrique par exemple de l'ordre de 10 $\Omega$.cm) et un bruit faible i$_{n,c}$ dans la mesure où la portion centrale 14.1 est plane. Le deuxième bloc électrique correspond aux portions latérales 14.2 du matériau thermistance 14, et est caractérisé par une résistance électrique R$_L$ très faible (résistivité électrique par exemple de l'ordre de 0,05 $\Omega$.cm) et un bruit élevé i$_{n,L}$ dans la mesure où les portions latérales 14.2 présentent une topologie tridimensionnelle.

Le bruit total i$_{n,tot}$ résultant de ces deux zones de bruit peut s'écrire :

$$i_{n,tot} = \sqrt{\left(\frac{R_c}{R_c + R_L} i_{n,c}\right)^2 + \left(\frac{R_L}{R_c + R_L} i_{n,L}\right)^2}$$

La résistance électrique R$_L$ est négligeable devant la résistance électrique R$_c$, pour au moins deux raisons : d'une part, la résistivité électrique $\rho_L$ est inférieure ou égale à 10% de la résistivité électrique $\rho_c$, par exemple égale à $\rho_c$/200 environ dans le cas de l'azote implanté ; d'autre part, la longueur de la portion centrale 14.1 dans le sens de circulation du courant électrique est supérieure à celle des portions latérales 14.2, par exemple de 10 à 20 fois supérieure. Il en résulte que le rapport R$_c$/R$_L$ entre les résistances électriques peut être compris entre 1000 et 2000 environ, en particulier dans le cas de l'azote implanté.

A titre d'exemple, dans le cas d'un rapport R$_c$/R$_L$ égal à 1500, l'équation précédente devient :

$$i_{n,tot} = \sqrt{\left(6{,}67 . 10^{-4} \times i_{n,L}\right)^2 + \left(9{,}99 . 10^{-1} \times i_{n,c}\right)^2}$$

Aussi, dans le cas où le bruit $i_{n,L}$ dans les portions latérales 14.2 est compris entre 1 à 100 fois le bruit $i_{n,c}$ dans la portion centrale 14.1, cela conduit à ce que le bruit total $i_{n,tot}$ associé au matériau thermistance 14 est sensiblement égal au bruit $i_{n,c}$ de la portion centrale 14.1 à 2,2‰ près.

Il apparaît donc que le fait de réduire fortement la résistivité électrique $\rho_L$ à température ambiante des portions latérales 14.2 du matériau thermistance 14 permet de s'affranchir du bruit excédentaire issu des portions latérales 14.2. Ce bruit excédentaire n'est physiquement pas supprimé, mais la faible résistivité électrique $\rho_L$ permet de rendre son impact sur le bruit total quasiment inexistant. Cela est ainsi obtenu au moyen de l'implantation ionique localisée de l'élément chimique additionnel A dans le matériau thermistance 14, et non pas par incorporation à la croissance de cet élément chimique A. Les performances du microbolomètre 1 sont alors améliorées.

De plus, les portions centrale et latérales de résistivités électriques différentes sont obtenues à partir d'un même matériau thermistance 14 et non pas par différentes étapes de dépôt de deux matériaux thermistances distincts ayant des résistivités électriques différentes et connectés électriquement l'un à l'autre, simplifiant ainsi le procédé de fabrication.

Par ailleurs, il apparaît que la forte diminution d'une décade de la résistivité électrique $\rho_L$ du matériau thermistance 14 dans les portions latérales 14.2 est obtenue directement après l'étape d'implantation ionique, sans qu'il soit nécessaire de réaliser un recuit de guérison des défauts d'implantation. Un tel recuit peut entraîner une modification non souhaitée des propriétés du matériau thermistance 14.

Il apparaît également qu'il est possible de réaliser des ouvertures 13a dans la couche isolante intermédiaire 13 de plus grande hauteur, jusqu'à induire un bruit $i_{n,L}$ dans les portions latérales 14.2 de l'ordre de 220 fois le bruit $i_{n,c}$ de la portion centrale 14.1. Il en résulte alors que le bruit total $i_{n,tot}$ associé au matériau thermistance 14 est égal à 1,01 fois environ le bruit $i_{n,c}$ de la portion centrale 14.1. Cela est notamment avantageux lorsque la couche isolante intermédiaire 13 s'étend au niveau des bras d'isolation thermique et participe, avec la couche isolante inférieure 11, à encapsuler une couche électriquement conductrice. Il est alors possible de réaliser une couche isolante intermédiaire 13 de plus grande épaisseur permettant d'améliorer la rigidité des bras d'isolation thermique, voire d'une épaisseur sensiblement égale à celle de la couche isolante inférieure 11 dans le but d'améliorer la stabilité mécanique des bras d'isolation thermique.

Le procédé de fabrication selon l'invention se distingue de celui décrit dans le document US2010/0243896A1 essentiellement en ce que les ouvertures 13a dans lesquelles se situe le matériau thermistance 14 sont situées au niveau de la membrane absorbante 10, et ne sont pas déportés au-dessus des piliers d'ancrage comme décrit dans ce document. Dans ce document, le matériau VOx situé au-dessus des piliers d'ancrage et dans les bras d'isolation thermique sont en court-circuit thermique avec le substrat : il ne participe donc pas à la détection du rayonnement électromagnétique d'intérêt. De plus, les portions de VOx à topologie tridimensionnelle sont situées au-dessus des piliers d'ancrage et de leur matériau métallique, de sorte qu'elles ne participent pas *a fortiori* à la détection du rayonnement électromagnétique d'intérêt. La résistivité électrique recherchée après l'implantation ionique est de l'ordre de $10^{-3}$ à $10^{-2}$ $\Omega$.cm.

En revanche, dans le cadre du procédé de fabrication selon l'invention, les portions 14.2 du matériau thermistance 14 à topologie tridimensionnelle sont situées dans la membrane absorbante 10. Elles sont donc isolées thermiquement du substrat par les bras d'isolation thermique 5 et participent à détecter le rayonnement électromagnétique. L'implantation ionique dans ces portions 14.2 permet de réduire l'impact du bruit en 1/f présent dans ces portions 14.2. La résistivité électrique de la portion 14.1 bidimensionnelle est de préférence comprise entre 5 et 50 $\Omega$.cm, et celle des portions 14.2 tridimensionnelles présente une résistivité électrique par exemple de l'ordre de 0.05 $\Omega$.cm, de manière à conserver un coefficient TCR propice à la détection du rayonnement électromagnétique, tout en diminuant l'impact du bruit en 1/f. Le matériau thermistance 14 est polarisé par les électrodes 12 en un matériau métallique, et non pas par des portions de VOx qui s'étendent dans les bras d'isolation thermique 5 et qui vient au contact des piliers d'ancrage 4.

Des modes de réalisation particuliers viennent d'être décrits. Différentes variantes et modifications apparaîtront à l'homme du métier.

**Revendications**

**1.** Procédé de fabrication d'au moins un microbolomètre (1), comportant les étapes suivantes :

    ◦ réalisation de piliers d'ancrage (4), s'étendant à partir d'un substrat (2), et comportant chacun un matériau électriquement conducteur ;
    ◦ réalisation de bras d'isolation thermique (5), comportant chacun une couche (12) d'un matériau métallique au contact du matériau électriquement conducteur du pilier d'ancrage (4) et formant une électrode de polarisation ;
    ◦ réalisation d'une membrane (10) destinée à être suspendue au-dessus du substrat (2) par les piliers d'ancrage (4) et les bras d'isolation thermique (5), et contenant :

- lesdites électrodes de polarisation (12),
- une couche isolante (13) dite intermédiaire recouvrant partiellement les électrodes de polarisation (12) et présentant des ouvertures (13a) débouchant sur les électrodes de polarisation (12),
- un matériau thermistance (14), réalisé en un premier composé ($VO_x$) à base d'oxyde de vanadium, formé continûment d'une portion dite centrale (14.1) recouvrant la couche isolante intermédiaire (13) et des portions dites latérales (14.2) venant au contact des électrodes de polarisation (12) au travers des ouvertures (13a) ;

**caractérisé en ce qu'**il comporte en outre les étapes suivantes :

○ détermination d'une quantité dite efficace non nulle ($y_{eff}$) d'au moins un élément chimique additionnel (A) incorporé par implantation ionique dans le premier composé, formant ainsi un composé dit modifié ($VO_xA_y$), pour lequel la résistivité électrique $\rho_L$ à température ambiante est inférieure ou égale à 10% de la résistivité électrique $\rho_c$ à température ambiante dudit premier composé ($VO_x$) ;
○ incorporation localisée, par implantation ionique, dans les portions latérales (14.2) du matériau thermistance (14), d'une quantité (y) dudit de élément chimique additionnel (A) supérieure ou égale à la quantité efficace ($y_{eff}$).

2. Procédé de fabrication selon la revendication 1, dans lequel l'élément chimique additionnel (A) est choisi parmi l'azote, le carbone, le silicium, le phosphore, le germanium et l'arsenic.

3. Procédé de fabrication selon la revendication 1 ou 2, dans lequel l'élément chimique additionnel (A) est choisi parmi l'azote, le carbone.

4. Procédé de fabrication selon l'une quelconque des revendications 1 à 3, dans lequel l'élément chimique additionnel est l'azote.

5. Procédé de fabrication selon l'une quelconque des revendications 1 à 4, dans lequel le matériau thermistance (14) comporte une quantité x d'oxygène sensiblement identique dans les portions centrale (14.1) et latérales (14.2), x étant la proportion d'oxygène par rapport au vanadium.

6. Procédé de fabrication selon l'une quelconque des revendications 1 à 5, dans lequel le matériau thermistance (14) comporte une quantité x d'oxygène telle que la résistivité électrique à température ambiante du premier composé du matériau thermistance (14) dans la portion centrale (14.1) est comprise entre 5 Ω.cm et 50 Ω.cm, x étant la proportion d'oxygène par rapport au vanadium.

7. Procédé de fabrication selon la revendication 6, dans lequel la quantité x d'oxygène est comprise entre 1,6 et 2,2.

8. Procédé de fabrication selon l'une quelconque des revendications 1 à 7, dans lequel le composé modifié ($VO_xA_y$) du matériau thermistance (14) comporte une quantité y de l'élément chimique additionnel (A) supérieure ou égale à 0,045, y étant la proportion de l'élément chimique additionnel (A) par rapport au vanadium.

9. Procédé de fabrication selon l'une quelconque des revendications 1 à 8, dans lequel l'étape d'implantation ionique comporte un dépôt d'une résine photosensible sur le matériau thermistance (14), présentant des ouvertures d'implantation situées en regard des ouvertures (13a) de la couche isolante intermédiaire (13), la résine photosensible présentant une épaisseur adaptée de manière à éviter une incorporation de l'élément chimique additionnel (A) dans la portion centrale (14.1).

**Patentansprüche**

1. Verfahren zur Herstellung mindestens eines Mikrobolometers (1), das die folgenden Schritte umfasst:

- Herstellen von Verankerungspfeilern (4), die sich von einem Substrat (2) ausgehend erstrecken und jeweils ein elektrisch leitfähiges Material umfassen;
- Herstellen von Wärmeisolierarmen (5), die jeweils eine Schicht (12) aus einem metallischen Material umfassen, die mit dem elektrisch leitfähigen Material des Verankerungspfeilers (4) in Kontakt steht und eine Polarisationselektrode bildet;

- Herstellen einer Membran (10), die dazu bestimmt ist, durch die Verankerungspfeiler (4) und die Wärmeisolierarme (5) über dem Substrat (2) aufgehängt zu werden, und Folgendes enthält:

-- die Polarisationselektroden (12),
-- eine sogenannte isolierende Zwischenschicht (13), die die Polarisationselektroden (12) teilweise bedeckt und Öffnungen (13a) aufweist, die an den Polarisationselektroden (12) münden,
-- ein Thermistormaterial (14), das aus einer ersten Verbindung ($VO_x$) auf Basis von Vanadiumoxid hergestellt ist, das durchgängig von einem sogenannten zentralen Abschnitt (14.1), der die isolierende Zwischenschicht (13) bedeckt, und sogenannten seitlichen Abschnitten (14.2), die durch die Öffnungen (13a) mit den Polarisationselektroden (12) in Kontakt kommen, gebildet wird;
**dadurch gekennzeichnet, dass** es weiter die folgenden Schritte umfasst:

- Bestimmen einer sogenannten effektiven Menge ungleich Null ($y_{eff}$) mindestens eines zusätzlichen chemischen Elements (A), das durch Ionenimplantation in die erste Verbindung integriert wird, wodurch eine sogenannte modifizierte Verbindung ($VO_xA_y$) gebildet wird, bei der der spezifische elektrische Widerstand $\rho_L$ bei Umgebungstemperatur kleiner oder gleich 10 % des spezifischen elektrischen Widerstands $\rho_c$ bei Umgebungstemperatur der ersten Verbindung ($VO_x$) ist;
- lokalisiertes Integrieren, durch Ionenimplantation in die seitlichen Abschnitte (14.2) des Thermistormaterials (14), einer Menge (y) des zusätzlichen chemischen Elements (A), die größer oder gleich der effektiven Menge ($y_{eff}$) ist.

2. Herstellungsverfahren nach Anspruch 1, wobei das zusätzliche chemische Element (A) aus Stickstoff, Kohlenstoff, Silicium, Phosphor, Germanium und Arsen ausgewählt ist.

3. Herstellungsverfahren nach Anspruch 1 oder 2, wobei das zusätzliche chemische Element (A) aus Stickstoff, Kohlenstoff ausgewählt ist.

4. Herstellungsverfahren nach einem der Ansprüche 1 bis 3, wobei das zusätzliche chemische Element Stickstoff ist.

5. Herstellungsverfahren nach einem der Ansprüche 1 bis 4, wobei das Thermistormaterial (14) eine Menge x an Sauerstoff umfasst, die im zentralen (14.1) und den seitlichen (14.2) Abschnitten im Wesentlichen gleich ist, wobei x der Anteil von Sauerstoff in Bezug auf das Vanadium ist.

6. Herstellungsverfahren nach einem der Ansprüche 1 bis 5, wobei das Thermistormaterial (14) eine solche Menge x an Sauerstoff umfasst, dass der spezifische elektrische Widerstand bei Umgebungstemperatur der ersten Verbindung des Thermistormaterials (14) im zentralen Abschnitt (14.1) im Bereich zwischen 5 $\Omega$.cm und 50 $\Omega$.cm liegt, wobei x der Anteil von Sauerstoff in Bezug auf das Vanadium ist.

7. Herstellungsverfahren nach Anspruch 6, wobei die Menge x an Sauerstoff im Bereich zwischen 1,6 und 2,2 liegt.

8. Herstellungsverfahren nach einem der Ansprüche 1 bis 7, wobei die modifizierte Verbindung ($VO_xA_y$) des Thermistormaterials (14) eine Menge y des zusätzlichen chemischen Elements (A) von größer oder gleich 0,045 umfasst, wobei y der Anteil des zusätzlichen chemischen Elements (A) in Bezug auf das Vanadium ist.

9. Herstellungsverfahren nach einem der Ansprüche 1 bis 8, wobei der Schritt der Ionenimplantation ein Abscheiden eines lichtempfindlichen Harzes auf dem Thermistormaterial (14) umfasst, das Implantationsöffnungen aufweist, die den Öffnungen (13a) der isolierenden Zwischenschicht (13) gegenüberliegen, wobei das lichtempfindliche Harz eine Dicke aufweist, die so angepasst ist, dass sie ein Integrieren des zusätzlichen chemischen Elements (A) in den zentralen Abschnitt (14.1) verhindert.

**Claims**

1. A method for manufacturing at least one microbolometer (1), including the following steps:

◦ making anchoring pillars (4), extending from a substrate (2), and each including an electrically-conductive material;
◦ making heat-insulating arms (5), each including a layer (12) of a metal material in contact with the electrically-conductive material the anchoring pillar (4) and forming a polarisation electrode;
◦ making a membrane (10) intended to be suspended over the substrate (2) by the anchoring pillars (4) and the heat-insulating arms (5), and containing:

- said polarisation electrodes (12),
- a so-called intermediate insulating layer (13) partially covering the polarisation electrodes (12) and having openings (13a) leading onto the polarisation electrodes (12),
- a thermistor material (14), made of a first compound ($VO_x$) based on vanadium oxide, continuously formed from a so-called central portion (14.1) covering the intermediate insulating layer (13) and from so-called lateral portions (14.2) coming into contact with the polarisation electrodes (12) throughout the openings (13a);

**characterised in that** it further includes the following steps:

◦ determining a so-called non-zero effective amount ($y_{eff}$) of at least one additional chemical element (A) incorporated by ion implantation into the first compound, thereby forming a so-called modified compound ($VO_xA_y$), the electrical resistivity $\rho_l$ of which at room temperature is lower than or equal to 10% of the electrical resistivity $\rho_c$ of said first compound ($VO_x$) at room temperature;
◦ locally incorporating, by ion implantation, into the lateral portions (14.2) of the thermistor material (14), an amount (y) of said additional chemical element (A) greater than or equal to the effective amount ($y_{eff}$).

2. The manufacturing method according to claim 1, wherein the additional chemical element (A) is selected from among nitrogen, carbon, silicon, phosphorus, germanium and arsenic.

3. The manufacturing method according to claim 1 or 2, wherein the additional chemical element (A) is selected from among nitrogen, carbon.

4. The manufacturing method according to any one of claims 1 to 3, wherein the additional chemical element is nitrogen.

5. The manufacturing method according to any one of claims 1 to 4, wherein the thermistor material (14) includes a substantially identical amount x of oxygen in the central (14.1 and lateral (14.2) portions, x being the proportion of oxygen with respect to vanadium.

6. The manufacturing method according to any one of claims 1 to 5, wherein the thermistor material (14) includes an amount x of oxygen such that the electrical resistivity at room temperature of the first compound of the thermistor material (14) in the central portion (14.1) is comprised between 5 $\Omega$.cm and 50 $\Omega$.cm, x being the proportion of oxygen with respect to vanadium.

7. The manufacturing method according to claim 6, wherein the amount x of oxygen is comprised between 1.6 and 2.2.

8. The manufacturing method according to any one of claims 1 to 7, wherein the modified compound ($VO_xA_y$) of the thermistor material (14) includes an amount y of the additional chemical element (A) greater than or equal to 0.045, y being the proportion of the additional chemical element (A) with respect to vanadium.

9. The manufacturing method according to any one of claims 1 to 8, wherein the ion implantation step includes depositing a photoresist over the thermistor material (14) having implantation openings located opposite the openings (13a) in the intermediate insulating layer (13), the photoresist having a thickness adapted so as to avoid an incorporation of the additional chemical element (A) into the central portion (14.1).

**Fig.1**

**Fig.2A**

**Fig.2B**

**Fig.2C**

**Fig.3**

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100243896 A1
- EP 2894444 B1
- EP 2208975 A1
- US 9933309 B